Europäisches Patentamt

European Patent Office

Office européen des brevets

(19)

(11) **EP 0 792 053 A1**

(12) **DEMANDE DE BREVET EUROPEEN**

(43) Date de publication:
27.08.1997 Bulletin 1997/35

(51) Int Cl.⁶: **H04L 27/233**

(21) Numéro de dépôt: **97200396.6**

(22) Date de dépôt: **13.02.1997**

(84) Etats contractants désignés:
**DE FR GB IT**

(30) Priorité: **21.02.1996 FR 9602148**

(71) Demandeur: **Philips Electronics N.V.
5621 BA Eindhoven (NL)**

(72) Inventeurs:
• **Chouly, Antoine
75008 Paris (FR)**

• **Brajal, Américo
75008 Paris (FR)**
• **Casals Castané, Josep
75008 Paris (FR)**

(74) Mandataire: **Landousy, Christian
Société Civile S.P.I.D.
156, Boulevard Haussmann
75008 Paris (FR)**

(54) **Système de transmissions numériques à modulation à phase continue**

(57)    Système de transmissions numériques (5) comprenant des moyens d'émission (10) qui délivrent un signal radiofréquence (RF) modulé par des données numériques (12) selon une modulation à phase continue et des moyens de réception (20) munis de moyens de conversion (21) pour convertir le signal radiofréquence (RF) reçu en un signal en bande de base (BB), de moyens de détection (24) pour détecter la modulation à phase continue du signal en bande de base et de moyens de décodage séquentiel (29) pour en extraire les données numériques.

Le système réalise une détection différentielle (24) et compense, par un décodage de Viterbi (29), les interférences intersymboles générées par le détection différentielle. Préférentiellement, il s'agit d'un décodage de Viterbi réduit muni d'une boucle de contre-réaction (FB) pour réduire les imprécisions de calcul dues à la réduction du nombre d'états traités par le décodage de Viterbi réduit.

Référence: figure 3

Applications: Systèmes de transmissions numériques à modulation à phase continue, transmissions numériques à faible débit par satellite, transmissions numériques à haute fréquence et à faible débit.

FIG. 3

EP 0 792 053 A1

## Description

L'invention concerne un système de transmissions numériques comprenant des moyens d'émission munis de moyens de modulation pour délivrer un signal radiofréquence modulé par des données numériques selon une modulation à phase continue et des moyens de réception munis de moyens de conversion pour convertir le signal radiofréquence reçu en un signal en bande de base, de moyens de détection pour détecter la modulation à phase continue du signal en bande de base et de moyens de décodage séquentiel pour en extraire les données numériques.

Le système peut être utilisé dans les transmissions par satellites, notamment à faible débit ou dans les transmissions à haute fréquence notamment à faible débit.

L'invention concerne également un récepteur pour détecter des signaux transmis numériquement par une modulation à phase continue.

Dans les modulations à phase continue, l'information est portée par la phase. Ces modulations sont intéressantes pour leur efficacité spectrale, leur puissance spectrale et leur amplitude constante. De ce fait, ces modulations peuvent être utilisées avec des amplificateurs de puissance opérant près de leur zone de saturation.

Un exemple de modulation à phase continue (en abrégé: CPM pour continuous phase modulation) est décrit dans le document: " Reduced state sequence detection of partial response continuous phase modulation", A. SWENSSON, IEE Proceedings-1, vol 138, n°4, 1991, pages 256 à 268. Ce document concerne le traitement des signaux opéré à la réception. Les moyens de réception comportent un détecteur qui réalise une détection cohérente du signal en bande de base suivi d'un décodeur de Viterbi. Une telle détection ne créé pas d'interférences intersymboles à la réception. Le décodeur de Viterbi n'est prévu et utilisé que pour corriger les imperfections générées à l'émission. Mais un tel système présente plusieurs inconvénients. Tout d'abord, la détection cohérente nécessite de disposer à la réception d'un oscillateur très précis ce qui complique et donc accroît le coût des matériels. De plus, la précision atteinte par la détection cohérente est insuffisante pour certaines applications. C'est par exemple le cas pour des transmissions à faible débit (quelques Mbits/s par exemple), par exemple pour des liaisons par satellite, et pour des transmissions à hautes fréquences (quelques GHz par exemple). Lorsque le rapport fréquence/débit devient supérieur à $10^4$ par exemple, les techniques décrites dans ce document deviennent insuffisantes.

Le but de l'invention est d'une part de permettre d'utiliser des modulations CPM pour les transmissions précitées en disposant d'une précision suffisante, et d'autre part de réduire le coût des matériels nécessaires.

Ce but est atteint avec un système pour lequel les moyens de détection réalisent une détection différentielle, les moyens de décodage séquentiel étant tels qu'ils corrigent des interférences intersymboles engendrées à la réception par la détection différentielle.

Ainsi la détection différentielle permet de disposer d'une précision de détection élevée tout en réduisant sérieusement le coût du matériel. Néanmoins, il est nécessaire de concevoir des moyens spécifiques de décodage séquentiel pour compenser les interférences intersymboles générées à la réception par la détection différentielle. Les moyens de décodage séquentiel opèrent sur des séquences de symboles reçus. Préférentiellement, selon l'invention, les moyens de décodage séquentiel comportent un décodeur de Viterbi qui met en oeuvre l'algorithme de Viterbi.

Plus particulièrement, la détection différentielle fournit une phase diférentielle pouvant prendre plusieurs états de transition possibles, les moyens de décodage séquentiel comportant un décodeur de Viterbi opérant sur un treillis d'états comportant un nombre réduit d'états, le décodeur de Viterbi comportant une boucle de contre-réaction pour réduire des imprécisions de calcul de métriques dues à la réduction du nombre d'états.

Préférentiellement, la boucle de contre-réaction fait intervenir une seule donnée binaire par état survivant fournie par le décodage de Viterbi réduit.

L'invention concerne également un récepteur de signaux radiofréquences modulés à l'émission par des données numériques selon une modulation à phase continue, le récepteur comportant des moyens de conversion pour convertir le signal radiofréquence reçu en un signal en bande de base, des moyens de détection pour détecter la modulation à phase continue du signal en bande de base et des moyens de décodage séquentiel pour en extraire les données numériques, caractérisé en ce que les moyens de détection réalisent une détection différentielle, les moyens de décodage séquentiel étant tels qu'ils corrigent des interférences intersymboles engendrées à la réception par la détection différentielle.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent:

Figure 1 : un schéma d'un système de transmission muni d'un émetteur et d'un récepteur.

Figure 2 : un schéma d'un émetteur.

Figure 3 : un schéma d'un récepteur muni d'un détecteur différentiel selon l'invention.

Figure 4 : un schéma des moyens de conversion du signal radiofréquence en un signal en bande de base.

Figure 5 : un schéma d'un détecteur différentiel pour déterminer les écarts de phase.

Figure 6 : un schéma d'un exemple de moyens de calcul des métriques.

Figure 7 : un treillis à 8 états pour une détection différentielle à 2 bits.

Figure 8 : une représentation schématique des états survivants issus du treillis réduit.

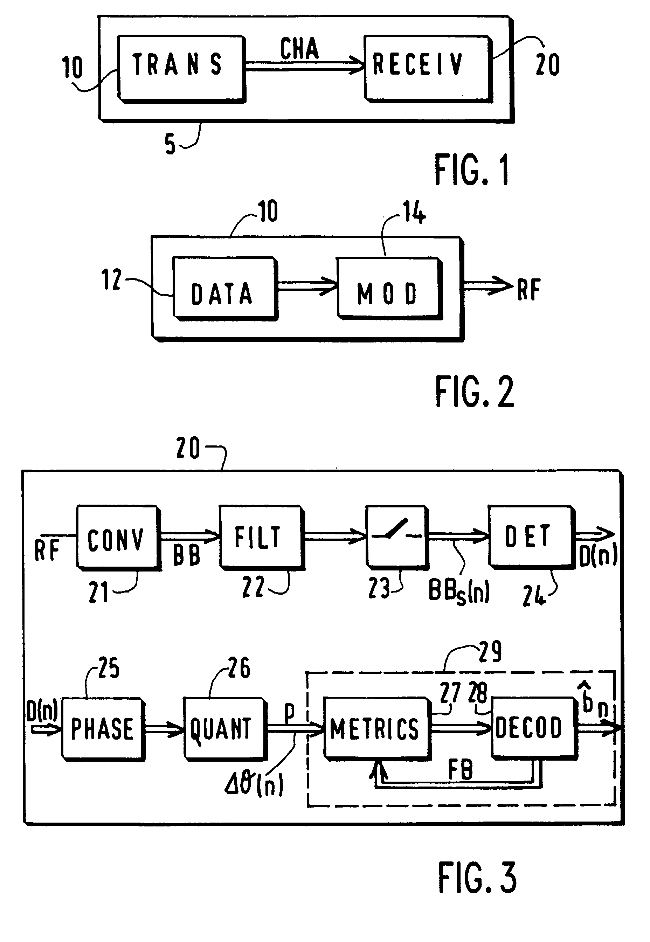

La figure 1 est un schéma bloc d'un système de communication 5 comportant des moyens d'émission TRANS 10 et des moyens de réception RECEIV 20 communiquant par un canal de transmission CHA. L'émetteur comporte une source DATA 12 de données numériques qui servent à moduler une porteuse dans des moyens de modulation MOD 14 (figure 2) pour délivrer un signal radiofréquence RF qui est placé sur le canal. Selon l'invention, la modulation mise en oeuvre est une modulation CPM à phase continue.

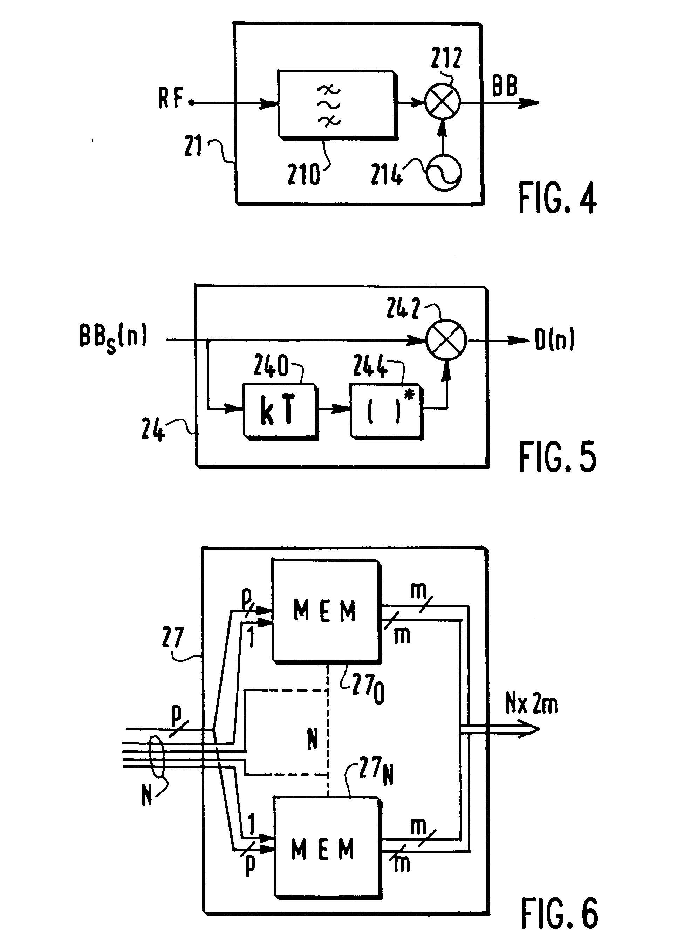

La figure 3 concerne les moyens 20 utilisés à la réception par l'invention pour extraire les données numériques de la modulation CPM. Le récepteur 20 comporte des moyens de conversion 21 pour convertir le signal radiofréquence RF reçu en un signal en bande de base BB complexe comportant deux composantes en quadrature. La figure 4 donne un schéma d'un exemple de moyens de conversion 21. Ils comportent un filtre passe-bande 210 dont la sortie est réunie à un mélangeur 212. Un oscillateur local 214 délivre deux signaux en quadrature au mélangeur 212 de façon à fournir en sortie un signal en bande de base complexe BB comportant deux composantes en quadrature.

Les composantes du signal en bande de base sont ensuite filtrées par un filtre passe-bas 22 puis échantillonnées par un échantillonneur 23 (figure 3). Le signal en bande de base échantillonné $BB_s$ fait alors l'objet d'une détection différentielle dans des moyens de détection 24 puis la phase différentielle est déterminée dans un mesureur de phase 25.

La figure 5 donne un exemple de moyens de détection différentielle 24 pour détecter la modulation CPM. Le signal en bande de base échantillonné $BB_s(n)$ qui sort de l'échantillonneur 23, à des instants successifs déterminés par n, arrive sur deux voies, d'une part dans un mélangeur 242 et d'autre part dans des moyens de retard 240 qui retardent le signal de k fois la durée binaire T. La valeur du nombre entier k a une influence sur la complexité et les performances de l'ensemble du système. En particulier, la valeur de k intervient sur l'équation de la métrique à calculer. La sortie des moyens de retard 240 est réunie à des moyens de transformation 244 qui transforment le signal qui lui est présenté en entrée en un signal conjugué. Le signal retardé conjugué est multiplié par le signal d'entrée non retardé dans le mélangeur 242 pour obtenir un signal différentiel complexe D(n). Ce dernier entre dans le mesureur de phase 25 qui délivre la mesure de la phase différentielle. Cette mesure, qui est indépendante de la phase du signal, constitue un symbole différentiel.

L'avantage d'utiliser un détecteur différentiel réside dans le fait qu'il n'est pas nécessaire de récupérer la phase de la porteuse, ce qui permet d'utiliser un oscillateur local moins performant que l'oscillateur local nécessaire pour effectuer une détection cohérente. Ceci conduit à un matériel bien moins onéreux.

Le symbole différentiel est quantifié dans un quantifieur 26 pour fournir $\Delta\theta(n)$ quantifié sur p bits. Mais les données qui sortent du quantifieur ne sont pas directement exploitables car la détection différentielle génère des interférences intersymboles qu'il est nécessaire de corriger. Ces interférences sont créées par l'existence de la voie de retard. Cette correction est effectuée en appliquant un algorithme de Viterbi à l'aide de moyens de décodage séquentiel 29. Pour cela, les moyens de décodage séquentiel comportent des moyens de calcul de métriques 27 suivis d'un décodeur de Viterbi 28. Le décodage de Viterbi délivre une succession d'états parmi des états possibles. Ces derniers peuvent être représentés sous la forme d'un treillis d'états. Tout d'abord, le système calcule des métriques de transitions possibles entre des états puis il choisit les chemins reliant les états pour lesquels les métriques sont les plus faibles. En effet, il est nécessaire de calculer les métriques des branches séparant les états de manière à déterminer le chemin optimal pour parcourir le treillis. Le calcul des métriques est effectué dans les moyens de calcul de métriques 27. Ces métriques sont ensuite traitées par le décodeur de Viterbi 28 pour délivrer une estimation $\hat{b}_n$ des données numériques $b_n$ provenant de l'émission.

Le calcul des métriques est conduit en tenant compte des écarts théoriques de phase que l'on obtiendrait dans le cas d'un détecteur différentiel opérant en l'absence de bruit et des écarts de phase existant réellement dans le système en fonctionnement.

Les écarts théoriques de phase peuvent être écrits tels que:

$$(1) \qquad \Delta\Phi(n) = \sum_{i=0}^{L} C_i b_{n-i}$$

avec $b_{n-i}$ pouvant prendre les valeurs +1 ou -1 et où $C_i$ sont des coefficients de pondération. Si la mémoire du système s'étend sur L bits $(b_{n-L}, ..., b_{n-2}, b_{n-1}, b_n)$ alors le détecteur de Viterbi aura $2^L$ états, chaque état d'indice n étant déterminé par les bits antérieurs $(b_{n-L}, ..., b_{n-1})$.

Dans le cas d'un algorithme conventionnel de Viterbi opérant sur la totalité des états du treillis, on calcule la métrique pour chaque transition de l'état $K \Rightarrow (\hat{b}_{n-L}^{K}, ..., \hat{b}_{n-1}^{K})$ vers l'état $S \Rightarrow (\hat{b}_{n-L+1}^{K}, ..., \hat{b}_{n-1}^{K}, \hat{b}_{n}^{S})$.

Cette distance est donnée par:

$$(2) \qquad d_{K \to S} = [\Delta\phi_{K \to S} \ominus \Delta\theta(n)]^2$$

avec:

$$(3) \qquad \Delta\Phi_{K-S} = \sum_{i=1}^{L} C_i \hat{b}_{n-i}^{K} + C_0 \hat{b}_n^{S},$$

où $\Delta\theta(n)$ est la différence de phase mesurée à la sortie du détecteur différentiel, où $\ominus$ est le signe de différence modulo $2\pi$ et où le signe (A) indique qu'il s'agit de bits estimés.

Le signal de sortie $D(n)$ des moyens de détection différentielle 24 représentés sur la figure 5 s'exprime en fonction du signal d'entrée $BB_s(n)$ par la relation:

$$(4) \qquad D(n) = BB_s(n) \cdot BB_s^*(n-k)$$

soit:

$$(5) \qquad D(n) = A^2 e^{j[\Phi(n)-\Phi(n-k)]} = A^2 e^{j[\Delta\Phi(n)]}.$$

A titre d'exemple, considérons une modulation de fréquence à phase continue TFM (Tame Frequency Modulation) qui est un type particulier de modulation CPM. Dans ce cas, en choisissant l'instant optimal d'échantillonnage $t_0$, la phase différentielle échantillonnée s'exprime par une fonction linéaire des bits antérieurs.

Dans le cas où il existe une seule cellule de retard 240, soit k=1, on obtient:

$$(6) \qquad \Delta\Phi(n) = \pi/8\ (b_{n-2} + 2b_{n-1} + b_n).$$

Dans le cas où il existe deux cellules de retard 240, soit k=2, on obtient:

$$(7) \qquad \Delta\Phi(n) = \pi/8(b_{n-3} + 3b_{n-2} + 3b_{n-1} + b_n).$$

D'une manière générale, pour une valeur quelconque de k, la variation de phase s'écrit:

$$(8) \qquad \Delta\Phi(n) = \pi/8\ (b_{n-k-1} + 3b_{n-k} + 4\sum_{l=k-1}^{l=2} b_{n-l} + 3b_{n-1} + b_n) \quad \forall k \geq 3.$$

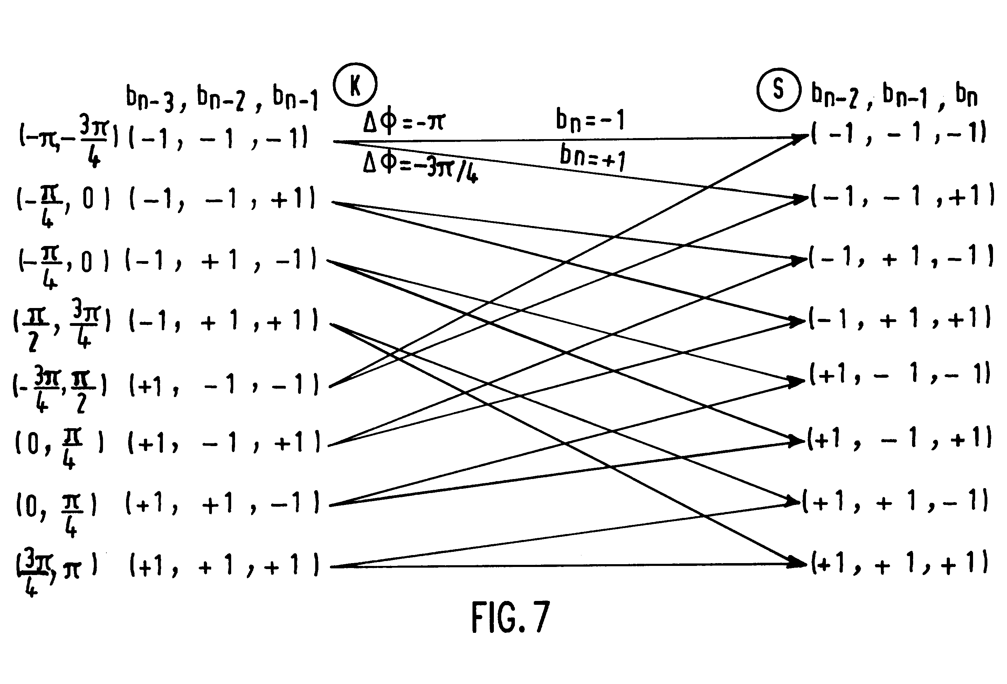

A titre d'exemple de détection différentielle, considérons le cas d'un détecteur différentiel à trois bits dans lequel le retard kT est égal à 2T. La phase différentielle théorique en sortie du détecteur est celle de l'équation 7. On observe que la phase différentielle théorique délivrée par le détecteur dépend du bit $b_n$ reçu à un instant donné défini par n, mais aussi des bits $b_{n-3}$, $b_{n-2}$ et $b_{n-1}$ reçus antérieurement. Ces trois bits antérieurs définissent un treillis à 8 états représenté sur la figure 7. A gauche est représenté un état K déterminé par les bits $b_{n-3}$, $b_{n-2}$, $b_{n-1}$ et à droite est représenté un état S qui succède à l'état K. L'état S est défini par l'état des bits $b_{n-2}$, $b_{n-1}$, $b_n$ qui succèdent aux trois bits précédents. Ainsi un état K $\Rightarrow$ (-1,-1,-1) va pouvoir transiter vers l'état S $\Rightarrow$ (-1,-1,-1) lorsque $b_n$ = -1 ou vers l'état S $\Rightarrow$ (-1,-1,+1) lorsque $b_n$ = +1. Dans cet exemple il y a donc 8 états S possibles et 16 métriques à déterminer. A chaque valeur de $b_n$ correspond un écart de phase, par exemple $\Delta\Phi$ = -$\pi$ pour $b_n$ = -1 et $\Delta\Phi$ -3$\pi$/4 pour $b_n$ = +1. Pour les autres états, les écarts de phase $\Delta\Phi$ sont indiqués à gauche du diagramme.

Selon l'invention, il est possible d'appliquer le décodage de Viterbi en tenant compte des tous les L bits définissant un état c'est-à-dire sur l'ensemble des 8 états du treillis dans le cas de l'exemple donné (L = 3). Préférentiellement selon l'invention, le décodeur de Viterbi 28 (figure 3) opère avec un nombre réduit de bits L < L , soit L = 2 dans le cas de l'exemple, le treillis étant alors réduit à 4 états. De plus, pour réduire les dégradations liées à la réduction du nombre d'états, selon l'invention, on fait intervenir une boucle de contre-réaction FB qui tient compte des bits d'états survivants antérieurs c'est-à-dire des bits dont la mise à l'écart a conduit à la réduction du treillis.

Dans le cas d'un décodage de Viterbi réduit, une transition d'un état K vers un état S devient une transition d'un état K' défini par $(\hat{b}^{K'}_{n-L'},...,\hat{b}^{K'}_{n-1})$ vers un état S' défini par $(\hat{b}^{K'}_{n-L'+1},..., \hat{b}^{K'}_{n-1}, \hat{b}^{S'}_{n})$. La métrique de la transition de l'état K' vers l'état S s'écrit:

$$(9) \qquad d_{K'\to S'} = \left[\Delta\Phi_{K'\to S'} \ominus \left(\Delta\theta(n) \ominus \sum_{i=L'+1}^{L} C_i \hat{b}^{K'}_{n-i}\right)\right]^2$$

avec:

$$(10) \qquad \Delta\Phi_{K'\to S'} = \sum_{i=1}^{L'} C_i \hat{b}^{K'}_{n-i} + C_0 \hat{b}^{S'}_{n},$$

où les bits $\hat{b}^{K'}_{n-i}$, $i = \{L'+1,...,L\}$ sont définis par le survivant de l'état K'.

Dans le cas de l'exemple de la modulation TFM, avec un détecteur différentiel opérant selon l'équation 7, on observe que pour un taux d'erreur binaire de $10^{-5}$, une dégradation signal/bruit de seulement 0,7 dB est atteinte par comparaison avec une détection cohérente.

En ce qui concerne le décodage de Viterbi, pour permettre d'effectuer une comparaison entre un décodage de Viterbi opérant sur le nombre réduit d'états et un décodage de Viterbi opérant sur le nombre total d'états, considérons un exemple basé sur un treillis à 16 états que l'on réduit à 8 états, le décodage de Viterbi réduit étant associé à la boucle de contre-réaction FB.

Considérons dans ce cas un détecteur différentiel à 3 bits. La phase différentielle théorique en sortie du détecteur s'écrit alors:

$$(11) \qquad \Delta\Phi(n) = \pi/8 \, (b_{n-4} + 3b_{n-3} + 4b_{n-2} + 3b_{n-1} + b_n).$$

Le bit $b_n$ de l'état S est donc déterminé par les bits $b_{n-4}$, $b_{n-3}$, $b_{n-2}$ et $b_{n-1}$. En réduisant le treillis de L = 4 à L' = 3, les équations 9 et 10 deviennent:

$$(12) \qquad d_{K'\to S'} = \left[\Delta\Phi_{K'\to S'} \ominus \left(\Delta\theta(n) \ominus \frac{\pi}{8} \hat{b}^{K'}_{n-4}\right)\right]^2$$

avec:

$$(13)$$

$$\Delta\Phi_{K'\to S'} = \sum_{i=1}^{3} C_i \hat{b}^{K'}_{n-i} + C_0 \hat{b}^{S'}_{n} = \frac{\pi}{8} \, (3\hat{b}^{K'}_{n-3} + 4\hat{b}^{K'}_{n-2} + 3\hat{b}^{K'}_{n-1} + \hat{b}^{S'}_{n}),$$

où $\hat{b}^{S'}_{n}$ est le bit affecté à la transition K' $\Rightarrow$ S' .
Le terme

$$\frac{\pi}{8} \hat{b}^{K'}_{n-4}$$

caractérise la correction effectuée par la boucle de contre-réaction.

Dans le cas d'une modulation TFM, un récepteur comportant la combinaison d'un tel détecteur différentiel à 3 bits de différence de phase, associé à un décodage de Viterbi réduit muni d'une boucle de contre-réaction, dispose de pratiquement les mêmes performances qu'un détecteur cohérent avec un décodage de Viterbi classique. Ceci est d'autant plus manifeste que le rapport signal/bruit est élevé.

Les métriques qui sont définies par les équations 2, 9 ou 12 peuvent être calculées en temps réel, mais préférentiellement elles sont précalculées et les résultats sont stockés sous forme de tables de lecture dans des mémoires. La figure 6 représente un exemple de réalisation des moyens 27 de calcul des métriques. Préférentiellement, on utilise des moyens $27_0$ à $27_N$ de stockage de métriques précalulées comprenant une batterie de N mémoires MEM (pour N états), par exemple des mémoires PROM, qui sont adressées par les p bits issus du quantifieur QUANT 26 et les bits issus de la boucle de contre-réction. Préférentiellement la boucle de contre-réaction adresse chaque mémoire par un seul bit, le bit $\hat{b}_{n-4}$ pour l'exemple de l'équation 12. La boucle de contre-réaction contient donc N bits (un par état), qui sont affectés respectivement à chaque mémoire. Une mémoire est donc adressée par p+1 bits. Chaque métrique est stockée sur m bits ce qui nécessite des mémoires ayant chacune une capacité de $2^{p+1}.2m$ bits pour délivrer deux métriques par état. Les métriques sont traitées par le décodeur de Viterbi 28 de manière classique. La mémoire reste de dimensions réduites, par exemple pour des données quantifiées sur p=6 bits et des métriques codées sur 6 bits, la taille de la mémoire est de 128x12=1536 bits.

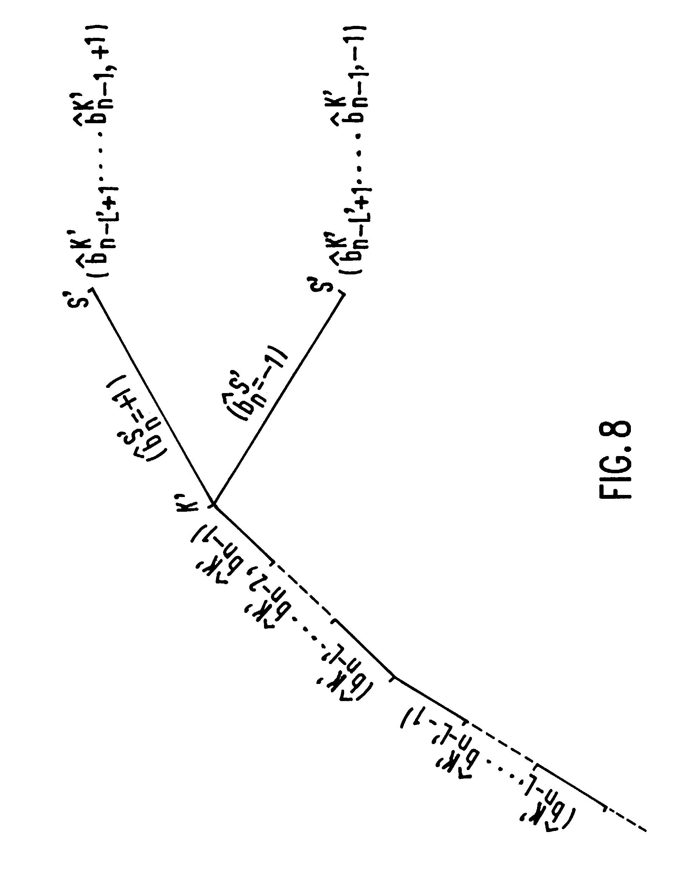

A une mémoire est affecté un état. Le bit $\hat{b}_{n-4}$ qui adresse en contre-réaction cette mémoire dépend donc de cet état et plus particulièrement de l'état survivant qui a été temporairement retenu. Une représentation des états survivants est indiquée schématiquement sur la figure 8. A un instant donné le décodeur de Viterbi doit décider de la transition de l'état K vers l'état S . Si un treillis réduit comporte L états, le survivant de rang 4 va contenir le bit $\hat{b}_{n-4}$ qui est une estimation du bit $b_{n-4}$ émis figurant dans l'équation 11. Si le décodeur de Viterbi opère sur L bits en abandonnant par exemple un bit (L-L' = 1), la boucle de contre-réaction va utiliser le bit $\hat{b}_{n-4}$ écarté temporairement qui se trouve dans un survivant antérieur. Pour chaque état, il y a de cette manière un survivant qui renferme un bit $\hat{b}_{n-4}$ écarté. Tous les bits $\hat{a}_{n-4}$ des survivants des états servent donc à adresser individuellement une des N mémoires $27_0$ à $27_N$.

On a observé que les performances atteintes avec le décodage de Viterbi réduit (8 états) muni d'une boucle de contre-réaction étaient presque identiques à celles atteintes avec un décodage de Viterbi classique sans réduction du nombre d'états (16 états) mais bien supérieure à un décodage de Viterbi non réduit à 8 états. La réduction des moyens matériels est par contre très importante.

Le récepteur combinant une détection différentielle et un décodage de Viterbi réduit avec boucle de contre-réaction fournit des performances aussi bonnes, voire meilleures pour certaines conditions d'exploitation, qu'un récepteur ayant une détection cohérente. Mais la complexité de mise en oeuvre est considérablement simplifiée et ne nécessite qu'un oscillateur moins performant. Par exemple, l'oscillateur peut présenter une qualité moindre, pouvant atteindre jusqu'à 40 dB de bruit de phase supplémentaire, sans que cela nuise au fonctionnement du système.

## Revendications

1.  Système de transmissions numériques (5) comprenant des moyens d'émission (10) munis de moyens de modulation (14) pour délivrer un signal radiofréquence (RF) modulé par des données numériques (12) selon une modulation à phase continue et des moyens de réception (20) munis de moyens de conversion (21) pour convertir le signal radiofréquence (RF) reçu en un signal en bande de base (BB), de moyens de détection (24) pour détecter la modulation à phase continue du signal en bande de base et de moyens de décodage séquentiel (29) pour en extraire les données numériques, caractérisé en ce que les moyens de détection réalisent une détection différentielle, les moyens de décodage séquentiel étant tels qu'ils corrigent des interférences intersymboles engendrées à la réception par la détection différentielle.

2.  Système selon la revendication 1 caractérisé en ce que la détection différentielle fournit une phase diférentielle pouvant prendre plusieurs états de transitions possibles, les moyens de décodage séquentiel (29) comportant un décodeur de Viterbi (28) opérant sur un treillis d'états comportant un nombre réduit d'états, le décodeur de Viterbi comportant une boucle de contre-réaction (FB) pour réduire des imprécisions de calcul de métriques (27) dues à la réduction du nombre d'états.

3.  Système selon la revendication 2 caractérisé en ce que le décodeur de Viterbi sauvegarde des états survivants desquels la boucle de contre-réaction extrait, pour calculer les métriques, des données numériques dont une mise à l'écart a entraîné la réduction du treillis.

4.  Récepteur de signaux radiofréquences (RF) modulés à l'émission par des données numériques (12) selon une modulation à phase continue, le récepteur (20) comportant des moyens de conversion (21) pour convertir le signal radiofréquence (RF) reçu en un signal en bande de base (BB), des moyens de détection (24) pour détecter la modulation à phase continue du signal en bande de base et des moyens de décodage séquentiel (29) pour en extraire les données numériques, caractérisé en ce que les moyens de détection (24) réalisent une détection différentielle, les moyens de décodage séquentiel étant tels qu'ils corrigent des interférences intersymboles engendrées à la réception par la détection différentielle.

5. Récepteur selon la revendication 4 caractérisé en ce que la détection différentielle fournit une phase diférentielle pouvant prendre plusieurs états de transitions possibles, les moyens de décodage séquentiel (29) comportant un décodeur de Viterbi (28) opérant sur un treillis d'états comportant un nombre réduit d'états, le décodeur de Viterbi comportant une boucle de contre-réaction (FB) pour réduire des imprécisions de calcul de métriques (27) dues à la réduction du nombre d'états.

6. Récepteur selon la revendication 5 caractérisé en ce que le décodeur de Viterbi sauvegarde des états survivants desquels la boucle de contre-réaction extrait, pour calculer les métriques, des données numériques dont une mise à l'écart a entraîné la réduction du treillis.

FIG. 1

FIG. 2

FIG. 3

8

FIG. 4

FIG. 5

FIG. 6

FIG.7

EP 0 792 053 A1

FIG. 8

Office européen
des brevets

**RAPPORT DE RECHERCHE EUROPEENNE**

Numero de la demande
EP 97 20 0396

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | 40TH IEEE VEHICULAR TECHNOLOGY CONFERENCE, 6 - 9 Mai 1990, ORLANDO, US, pages 738-741, XP000204201 KAWAS KALEH: "Viterbi differential detection for binary partial response continuous phase modulation with index 0.5" * page 738, colonne de gauche, alinéa 2 - colonne de droite, alinéa 2 * --- | 1,4 | H04L27/233 |
| Y | ELECTRONICS & COMMUNICATIONS IN JAPAN, PART I - COMMUNICATIONS, vol. 79, no. 1, Janvier 1996, NEW YORK US, pages 82-96, XP000553793 SERIZAWA ET AL: "Phase-tracking Viterbi demodulator" * page 82, colonne de droite, alinéa 1 * * page 84, colonne de gauche, alinéa 3 * * page 89, colonne de gauche, alinéa 2 * * figures 1-3 * --- | 1,4 | |
| D,A | IEE PROCEEDINGS-I, vol. 138, no. 4, Août 1991, pages 256-268, XP000259815 SVENSSON: "Reduced state sequence detection of partial response continuous phase modulation" * page 256, colonne de droite, alinéa 3 - alinéa 4 * --- -/-- | 1-6 | DOMAINES TECHNIQUES RECHERCHES (Int.Cl.6) H04L |

Le présent rapport a été établi pour toutes les revendications

| Lieu de la recherche | Date d'achèvement de la recherche | Examinateur |
|---|---|---|
| LA HAYE | 21 Avril 1997 | Williams, M.I. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

Office européen
des brevets

**RAPPORT DE RECHERCHE EUROPEENNE**

Numero de la demande

EP 97 20 0396

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | IEEE TRANSACTIONS ON COMMUNICATIONS, vol. 41, no. 1, Janvier 1993, NEW YORK US, pages 90-98, XP000367757 SIMON ET AL: "Maximum-likelihood detection of noncoherent continuous phase modulation" * page 90, colonne de gauche, alinéa 2 - colonne de droite, alinéa 1 * ----- | 1-6 | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 21 Avril 1997 | Williams, M.I. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)